# EUROPÄISCHE PATENTANMELDUNG

(11) **EP 0 886 078 A2**
(43) Veröffentlichungstag der Anmeldung: **23.12.1998**
(21) Anmeldenummer: 98111074.5
(22) Anmeldetag: 17.06.1998
(51) Int. Cl.: F16F 7/08, F16F 1/44

(54) **Reibungsdämpfer mit einem Elastomerfederlement**

(30) Priorität: 19.06.1997 DE 19726048
(71) Anmelder: BASF AKTIENGESELLSCHAFT, 67056 Ludwigshafen (DE)
(72) Erfinder: Burlage, Thomas, 49134 Wallenhorst (DE); Hörauf, Martin, 49448 Stemshorn (DE); Klandt, Michael, 52062 Aachen (DE); Wahle, Michael, Prof. Dr., 52511 Geilenkirchen (DE)
(74) Vertreter: Isenbruck, Günter, Dr.

(57) **Zusammenfassung**

Schwingungsdämpfer (1) mit zwei zueinander verschieblichen Lagerelementen (2,3), die jeweils einseitig von einem Federanlagebereich (4,5) begrenzt sind, und einem in den Lagerelementen (2,3) befindlichen Elastomerfederelement (7), dessen Stirnflächen (8,9) jeweils gegen den Federanlagebereich (4,5) anliegen, **dadurch gekennzeichnet,** daß das Elastomerfederelement (7) derart ausgebildet und zwischen den Lagerelementen (2,3) angeordnet ist, daß es bei der Verschiebung der Lagerelemente (2,3) mit zumindest einem Teilbereich seiner Mantelfläche (12) mit zumindest einem der Lagerelemente (2,3) in Reibungskontakt gelangt, wobei sich der Reibungskontaktbereich bei der Verschiebung ändert.

## Beschreibung

Die Erfindung betrifft einen Schwingungsdämpfer mit zwei zueinander verschieblichen Lagerelementen, die jeweils einseitig von einem Federanlagebereich begrenzt sind, und einem in den Lagerelementen befindlichen Elastomerfederelement, dessen Stirnflächen jeweils gegen den Federanlagebereich anliegen.

Schwingungsdämpfer haben die Aufgabe, Schwingungen durch Umwandlung der Schwingungsenergie in Wärme zum Abklingen zu bringen. In Kraftfahrzeugen werden Schwingungsdämpfer als Stoßdämpfer oder Pralldämpfer eingesetzt. Als Achsdämpfer eingesetzte Stoßdämpfer haben die Aufgabe, Fahrsicherheit und Fahrbequemlichkeit zu erhöhen. Insbesondere an Stoßstangen angeordnete Pralldämpfer dienen dazu, größere strukturelle Schäden an dem Kraftfahrzeug im Falle eines leichten Aufpralls zu vermeiden. Da die hierzu eingesetzten, üblichen hydraulischen Schwingungsdämpfer insbesondere wegen der notwendigen Abdichtungen störanfällig und teuer, sowie wegen der in ihnen befindlichen Hydraulikfiüssigkeit schwer zu recyceln sind, wurden Reibungsdämpfer entwickelt, die keine flüssigen Medien enthalten.

So ist aus der DE 25 49 936 C2 ein Pralldämpfer bekannt, bei dem eine Elastomerfeder in einer starten Hülle angeordnet ist und die Stirnfläche dieser starten Hülle eine Anlage der Elastomerfeder aufweist, während die zweite Anlage der Elastomerfeder durch einen sich relativ zur starren Hülle bewegbaren Kolben gebildet wird, wobei die Elastomerfeder eine in Achsrichtung verlaufende durchgehende Öffnung besitzt und ein ausschließlich von der Innenwand der Elastomerfeder gebildeter Hohlraum angeordnet ist, der sich über die gesamte axiale Länge der Elastomerfeder erstreckt, und bei dem die Elastomerfeder mit der gesamten Außenfläche bei jedem Betriebszustand des Pralldämpfers auf der Innenfläche der starten Hülle anliegend ausgebildet ist. Im Fall einer Beaufschlagung der Elastomerfeder mit einer Last wird diese komprimiert, wobei zwischen der Außenfläche der Feder und der Innenfläche des Hülsenelementes eine Reibung entsteht, die der Lastrichtung entgegengerichtet ist und die Schwingungsenergie in Wärme umsetzt. Ein solcher Schwingungsdämpfer weist den Nachteil auf, daß die hohlzylindrisch ausgeführte Elastomerfeder unter Last ausknicken oder beulen kann, was zu einer geringen Dämpfung und sogar einem Versagen des Schwingungsdämpfers infolge eines starken Kraftabfalls führen kann. Dies gilt erst recht für größere Federlängen, so daß nur begrenzte Federwege und geringe Dämpfungswirkungsgrade realisiert werden können. Weiter führt die Ausgestaltung als Hohlfeder zu einer schlechten Volumenausnutzung in dem Schwingungsdämpfer.

In der DE-OS 2 223 314 ist ein Stoßfänger mit Elastomerfeder und Reibungsdämpfung beschrieben, bei dem eine starre Hülle von im wesentlichen rohrförmiger Gestalt mit einer Aufweitung ausgebildet ist, deren Durchmesser verhältnismäßig größer ist als der des vorderen Teils der Hülle, und der durch die Bauweise abgeschlossene Stirnenden aufweist, bei dem sich im vorderen Teil der Hülle ein in axialer Richtung bewegbarer Kolben befindet, wobei die zylinderähnliche Elastomerfeder in der Hülle axial zwischen dem Kolben und einem abgeschlossenen Stirnende angeordnet ist und im Bereich des vorderen Teils der Hülle einen im wesentlichen gleichmäßigen Außendurchmesser aufweist, der zur Erzielung eines radialen Zwanges auf die Elastomerfeder maßlich gleich oder größer ist als der Innendurchmesser des vorderen Teils der Hülle, und bei dem der Innendurchmesser der Aufweitung der Hülle so bemessen ist, daß Verformung und Ausbuckeln der Elastomerfeder in begrenztem Umfang möglich sind. Bei diesem Schwingungsdämpfer liegt die Außenfläche der Elastomerfeder nur teilweise gegen die Innenseite des Hülsenelementes an. Im Fall einer Beanspruchung wird die Elastomerfeder durch einen Kolben in Richtung Boden komprimiert, wobei der dem Boden zugewandte Federabschnitt ausknicken oder beulen kann. Diese Verformung der Elastomerfeder führt zu einer gegenüber lediglich axial belasteten Bauteilen höheren Materialbeanspruchung und geringen Kraftaufnahme, womit bei einer bestimmten Energieaufnahme ein größeres Federvolumen und damit ein größeres Bauvolumen für den Schwingungsdämpfer verbunden ist. Weiter führt die Biegebeanspruchung der Elastomerfeder zu einem schnelleren Verschleiß des Schwingungsdämpfers.

Schließlich ist aus dem DE-GM 1 811 684 ein Teleskopstoßdämpfer bekannt, welcher an einem Ende der Kolbenstange einen von einem Schutzrohr des Dämpfers umgebenden elastischen Anschlag besitzt, der mit dem Dämpfergehäuse zusammenarbeitet, wobei der Anschlag durch eine zylindrische Gummihohlfeder gebildet wird, die mit Abstand von der Kolbenstange und dem Schutzrohr verläuft und welche bei völligem Zusammendrücken sowohl an der Kolbenstange, als auch am Schutzrohr anliegt. Im unbelasteten Zustand berührt die Hohlfeder weder die Kolbenstange noch die Innenoberflächen des Dämpfergehäuses. Erst im Fall einer Komprimierung dehnt sich die Hohlfeder radial aus, bis sie gegen den Kolben und die Innenoberflächen des Dämpfers anliegt. Somit läßt sich mit einem derart ausgestalteten Schwingungsdämpfer nur eine sehr geringe Dämpfung erzielen. Dies um so mehr, als ein Ausknicken der Feder zu Beginn der Belastung erfolgen wird.

Demgegenüber liegt der Erfindung die Aufgabe zugrunde, einen Schwingungsdämpfer zu schaffen, bei dem definierte Verhältnisse des Reibungskontaktbereiches in einstellbarer Weise sowie eine hohe Dämpfung und Arbeitsaufnahme bei geringer Baugröße und guter Recyclingfähigkeit sowie geringem Gewicht erzielt werden.

Diese Aufgabe wird dadurch gelöst, daß das Elastomerfederelement derart ausgebildet und zwischen den Lagerelementen angeordnet ist, daß es bei der Verschiebung der Lagerelemente mit zumindest einem Teilbereich seiner Mantelfläche mit zumindest einem der Lagerelemente in Reibungskontakt gelangt, wobei sich der Reibungskontaktbereich bei der Verschiebung ändert.

Durch die Verwendung einer Elastomerfeder kann auf den Einsatz flüssiger Dämpfermedien verzichtet werden. Hiermit entfallen auch die mit diesen verbundenen Nachteile, wie beispielsweise die erforderlichen teuren Dichtungen, hohes Schwingungsdämpfergewicht infolge hohen Innendrucks und höheren Gewichts des Dämpfermediums, sowie aufwendige Demontage.

Ein weiterer Vorteil liegt in einer leichten Auswechselbarkeit der Elemente zur Anpassung an geänderte Betriebsbedingungen.

Bei einer bevorzugten Ausführungsform mit Komprimierung des Elastomerfederelementes erfährt dieses eine radiale Ausdehnung in Richtung Lagerelemente. Hierdurch vergrößert sich der Anteil der gegen die Lagerelemente anliegenden Mantelfläche des Elastomerfederelementes und somit der Reibungskontaktbereich zwischen den genannten Elementen, so daß eine sehr hohe Reibkraft zwischen der Mantelfläche des Elastomerfeder und der Oberfläche des Hülsenelementes eingestellt und damit eine hohe Dämpfung erzielt werden. Durch Einstellung entsprechender Parameter wird ein Schwingungsdämpfer geschaffen, dessen Dämpfungscharakteristik bestimmungsabhängig definiert werden kann und bei dem eine hohe Dauerbelastbarkeit bzw. Belastungshäufigkeit aufgrund des Verschleißverhaltens des Elastomerfederelementes vorliegt.

Ein solcher Parameter ist der zwischen dem Elastomerfederelement und den Lagerelementen vorhandene arithmetische Mittenrauhwert oder die Gleitreibungszahl. Der arithmetische Mittenrauhwert Rₐ ist gemäß DIN 4768 Teil 1 der arithmetische Mittelwert der absoluten Beträge der vertikalen Abstände des Ist-Rauheitsprofils vom mittleren Rauheitsprofil innerhalb der Meßstrecke. Die Gleitreibungszahl µ dient zur Beschreibung der Bewegungsreibung zwischen Körpern, deren Geschwindigkeiten in der Berührungsfläche nach Betrag und/oder Richtung unterschiedlich ist. Sie ist gemäß DIN 50 281 eine dimensionslose Zahl, die sich aus dem Verhältnis von Reibungskraft zu Normalkraft bzw. Reibungsmoment zu dem Produkt aus einem charakteristisch zu bestimmenden Radius (Hebelarm der Drehung) und Normalkraft ergibt, wobei die Reibkraft eine Kraft ist, die infolge der Reibung als mechanischer Widerstand gegen eine Relativbewegung auftritt, und die Normalkraft eine Kraft ist, die zur Reibungsfläche senkrecht steht und die beiden Körper gegeneinander drückt.

Der arithmetische Mittenrauhwert Rₐ und die Gleitreibungszahl µ bestimmen die Dämpfungscharakteristik des Schwingungsdämpfers nachhaltig, da sie für die Umwandlung der während des Schwingungsvorganges auftretenden kinetischen Energie in Wärmeenergie maßgeblich sind. Daher wird vorzugsweise vorgesehen, daß der Mittenrauhwert zwischen Elastomerfederelement und den Lagerelementen und die Gleitreibungszahl zur Festlegung der Dämpfungswirkung mit einem Mittenrauhwert gleich oder größer als 12 µm und einer Gleitreibungszahl von mindestens 0,2 eingestellt sind. Dies kann derart geschehen, daß ein dem Verwendungszweck angepaßter Kontaktbereich für die Nullage, in der der Schwingungsdämpfer keiner Belastung unterworfen ist, mehr oder weniger groß bestimmt wird. Weiter kann dieser Bereich für den Schwingungsdämpfer unter Last verschieden groß bestimmt sein. So ist es besonders vorteilhaft, wenn die Mantelfläche des Elastomerfederelementes im unbelasteten Zustand gegen die Oberfläche wenigstens eines Lagerelementes zu wenigstens 30% der gesamten Oberfläche der Lagerelemente im voll belasteten Zustand angelegt ist. Hierdurch wird erreicht, daß einerseits eine genügend hohe Reibung vorhanden ist, um die erforderliche hohe Dämpfung des Schwingungsdämpfers unter Last, andererseits aber auch eine sichere Rückstellung des Schwingungsdämpfers auch nach vielen Lastspielen bei Entlastung zu erreichen. Wegen seiner in Umfangsrichtung gleichbleibend definierten Eigenschaften ist zur Einstellung der gewünschten Dämpfungscharakteristik ein rotationssymmetrischer Körper besonders geeignet.

Das vorgesehene Elastomerfederelement wird im Fall einer Belastung überwiegend axial beansprucht. Aufgrund dieser axialen Belastung und dem teilweisen Anliegen des Elastomerfederelementes gegen die Oberfläche sowie der Kompressibilität des Werkstoffes wird ein Ausknicken oder Beulen des Elastomerfederelementes vermieden. Auch die Rückstellung des Elastomerfederelementes nach Wegfall der Last ist gewährleistet, da diese nur teilweise gegen die Oberfläche wenigstens eines Lagerelementes anliegt. Durch die Verwendung eines aus einem Elastomer hergestellten Federelementes wird erreicht, daß trotz der vorgesehenen hohen Reibung zwischen Federelement und der Oberfläche wenigstens eines Lagerelementes kein oder nur geringster Abrieb auftritt, wodurch der Schwingungsdämpfer auch nach vielen Lastspielen voll reversibel arbeitet.

Eine weitere Sicherung zur Vermeidung von Ausknicken und Beulen wird gemäß einer weiteren Ausführungsform der Erfindung dadurch erreicht, daß das Elastomerfederelement von einem Führungselement geführt ist. Dabei kann das Federelement als Hohlfeder ausgebildet sein, in die hinein sich das Führungselement erstreckt.

In besonders vorteilhafter Weise besteht das Federelement aus zelligem Polyurethan, welches eine Dichte von 300 bis 800 kg/m³ aufweist. Durch die in diesem Material enthaltenen Gasblasen wird ein verbesserter Druckaufbau in dem Schwingungsdämpfer erzielt. Weiter weist das Federelement aus zelligem Polyurethan in vorteilhafter Weise ein gutes Abriebs- und Verschleißverhalten auf. Mit dieser Ausgestaltung wird zusätzlich erreicht, daß die in dem von dem Führungselement, dem Elastomerfederelement und dem Federanlagebereich eines Hülsenelementes gebildeten Hohlraum befindliche Luft bei Belastung des Schwingungsdämpfers komprimiert wird, was zu einem zusätzlichen Druckaufbau innerhalb des Elastomerfederelementes und somit zu einem erhöhten Anpreßdruck des Elastomerfederelementes an die Oberfläche eines Lagerelementes führt. Somit wird also auch durch diese Ausgestaltung der Dämpfungswirkungsgrad des erfindungsgemäßen Schwingungsdämpfers erhöht, wobei dieser Wirkungsgrad mit zunehmender Einfahrgeschwindigkeit zunimmt.

Entsprechend der erforderlichen Energieaufnahme können mehrere erfindungsgemäße Schwingungsdämpfer parallel geschaltet werden.

Besonders vorteilhaft ist es jedoch, wenn die einem Federanlagebereich des mit kleinerem Außendurchmesser ausgebildeten Lagerelementes zugewandte Stirnfläche des Elastomerfederelementes gegen einen das Lagerelement abschließenden Federanlagebereich anliegt, durch dessen Mittenöffnung sich ein kolbenförmiges Führungselement erstreckt, dessen Kolben gegen die dem Federanlagebereich abgewandte Seite gegen den Federanlagehereich, und dessen dem Federanlagebereich zugewandte Seite gegen ein zwischen ihm und dem Federanlagebereich befindliches Elastomerfederelement anliegt. Hierdurch werden zwei Elastomerfederelemente in besonders raumsparender Weise integriert und kräftemäßig parallel geschaltet.

Weitere vorteilhafte Ausgestaltungen lassen sich den Ausführungsbeispielen der Erfindung entnehmen. Diese werden im folgenden anhand der Figuren beschrieben, bei denen
- Figur 1: einen Schwingungsdämpfer im Längsschnitt,
- Figur 2: einen Schwingungsdämpfer mit einem Führungselement im Längsschnitt,
- Figur 3: einen mit zwei parallel geschalteten Elastomerfederelementen ausgebildeten Schwingungsdämpfer im Längsschnitt,
- Figur 4: einen mit zwei Führungselementen ausgebildeten Schwingungsdämpfer im Längsschnitt,
- Figur 5: einen mit einem Energieverzehrelement ausgebildeten Schwingungsdämpfer im Längsschnitt, und
- Figur 6: einen Ausschnitt eines mit zwei parallel geschalteten Elastomerfederelementen und einem Reibelement versehen Schwingungsdämpfers im Längsschnitt,
zeigt.

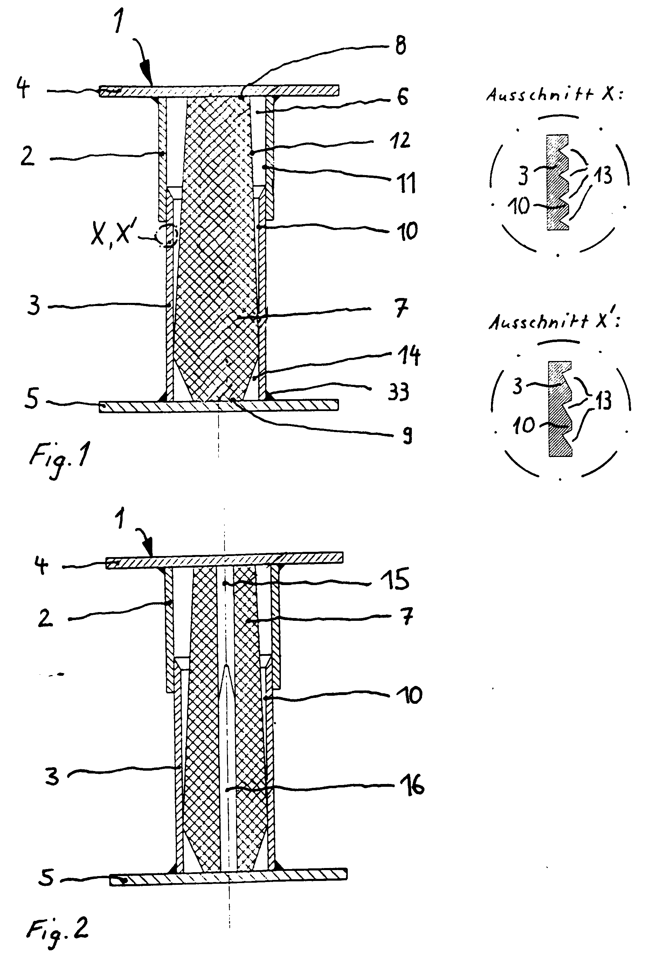

Der in Figur 1 dargestellte Schwingungsdämpfer 1 kann beispielsweise an einem Fahrwerk eines Luftfahrzeuges, als Puffer eines Schienenfahrzeuges oder als Aufsetzpuffer eines Kranes oder eines Fahrstuhles verwendet werden. Besonders bevorzugt ist ein Einsatz als Pralldämpfer zwischen einer Stoßstange und deren Aufhängung in einem Kraftfahrzeug. In diesem Fall ist vorgesehen, daß sich der Schwingungsdämpfer bei niedrigen Geschwindigkeiten beispielsweise bis zu 4 km/h oder 8 km/h reversibel verformt. Bei höheren Geschwindigkeiten beispielsweise bis zu 15 km/h kann sich der Schwingungsdämpfer bei entsprechender Ausgestaltung irreversibel verformen, so daß im Fall eines Aufpralls des Kraftfahrzeuges lediglich der Schwingungsdämpfer in Mitleidenschaft gezogen wird, nicht jedoch die Längs- oder Querträger des Kraftfahrzeuges selbst. Erst bei Geschwindigkeiten über beispielsweise den 15 km/h werden letztere ebenfalls beschädigt.

Der Schwingungsdämpfer 1 weist zwei Lagerelemente 2 und 3 auf, die als ineinander verschiebliche Hohlzylinder ausgebildet sind. Jedes der Lagerelemente 2 bzw. 3 ist mit einem Federanlagebereich 4 bzw. 5 versehen, welche als Böden die Lagerelemente 2 bzw. 3 verschließen, wodurch ein im wesentlichen zylindrischer Raum 6 gebildet wird. Die Lagerelemente 2 und 3 liegen gerade so eng aneinander, daß die in dem Raum 6 enthaltene Luft bei einer Komprimierung des Schwingungsdämpfers 1 aus dem Raum 6 entweichen, und im Fall der Dekomprimierung des Schwingungsdämpfers 1 Luft wieder in den Raum 6 einströmen kann, wobei ein Eindringen von Schmutz, Wasser etc. weitgehend vermieden werden kann. Das Strömen der Luft kann über in den Lagerelementen 2 und 3 und/oder in den Federanlagebereichen 4 und 5 vorgesehene Bohrungen (hier nicht gezeigt) erfolgen.

In dem Raum 6 befindet sich ein Elastomerfederelement 7. Die Stirnenden 8 bzw. 9 des Elastomerfederelementes 7 liegen jeweils derart gegen den Federanlagebereich 4 bzw. 5 an, daß das Elastomerfederelement 7 unter Vorspannung steht. Das aus einem mikrozelligen Polyurethan bestehende Elastomerfederelement 7, beispielsweise einem leichten, zelligen Polyurethan-Elastomer mit einer mittleren Dichte von 300 bis 800 kg/m³, kann auf übliche Weise mittels Gieß-, Spritzgieß- oder Schäumverfahren hergestellt werden. Dies erlaubt die Ausgestaltung eines Elastomerfederelementes 7 mit der in der Figur 1 gezeigten Kontur, die im wesentlichen aus einem sich in Richtung Federanlagebereiche 4 und 5 verjüngenden Vollzylinder oder zwei mit ihren Basen aneinanderliegenden Kegelstümpfen gebildet ist. Der maximale Durchmesser des Zylinders befindet sich etwa in dem dem Federanlagebereich 5 zugewandten Viertel des Elastomerfederelementes 7 und entspricht etwa dem Innendurchmesser des Lagerelementes 3, so daß das Elastomerfederelement 7 in radialer Richtung an der Oberfläche 10 des Lagerelementes 3 eine Abstützung erfährt. Abhängig von dem gewünschten Dämpfungsverhalten kann die Größe der Anlage des Elastomerfederelementes 7 an der Oberfläche 10 sowohl für den unbelasteten als auch den belasteten Zustand verändert werden. In dem hier gezeigten Fall liegt der obere, dem Federanlagebereich 4 zugewandte Abschnitt des Elastomerfederelementes 7 nicht gegen die Oberfläche 11 des Lagerelementes 2 an, obwohl dies ebenfalls möglich wäre.

Bei einem Aufprall des Kraftfahrzeuges wird beispielsweise das Lagerelement 2 des Schwingungsdämpfers 1 mit dem daran angeschlossenen Federanlagebereich 4 in Richtung Lagerelement 3 und Federanlagebereich 5 bewegt. Hierbei wird das in dem Raum 6 befindliche zellige Elastomerfederelement 7 derart komprimiert, daß dessen Mantelfläche 12 gegen die Oberfläche 10 des Lagerelementes 3 zur Anlage kommt. Infolge der weiteren Stauchung des Elastomerfederelementes 7 wird dessen Mantelfläche 12 axial an der Oberfläche 10 entlang bewegt, so daß die eingeprägte kinetische Energie die elastischen Eigenschaften der Feder und durch Reibung der Mantelfläche 12 des Elastomerfederelementes 7 an der Oberfläche 10 bei der Ein- und Ausfederung in Wärmeenergie umgewandelt und damit eine Dämpfung des Schwingungsdämpfers 1 erzielt wird.

Zwischen der Mantelfläche 12 des Elastomerfederelementes 7 und der Oberfläche 10 des Lagerelementes 3 beträgt der arithmetische Mittenrauhwert Rₐ 25 µm, und die Gleitreibungszahl µ ist 0,2. Mit diesen Werten können eine Energieaufnahmerate (Dämpfungswirkungsgrad) von über 50% bezogen auf eine ideale Dämpferkennlinie und eine Dämpfungsrate von 90% bei einem nahezu linearen Kraftanstieg erzielt werden. Diese Werte sind einstellbar, indem die Oberflächengestaltung der Oberfläche 10 angepaßt wird. In dem hier dargestellten Beispiel ist die Oberfläche 10, wie in Ausschnitt X der Figur 1 gezeigt, mit 2 mm tiefen dreieckigen Vertiefungen 13 versehen, so daß sich eine trapezförmige Profilgestaltung der Oberfläche 10 ergibt. Zum Zwecke einer Veränderung der Energieaufnahme- und Dämpfungsrate können ein anderer arithmetischer Mittenrauhwert und eine andere Gleitreibungszahl leicht eingestellt werden, indem die Profilgestaltung geändert wird. So kann beispielsweise der Abstand der trapezförmigen Elemente oder deren Tiefe verändert werden. Auch ist es möglich, statt des Trapezprofils ein sägezahnartiges oder anders gestaltetes Profil vorzusehen.

So ist in Ausschnitt X' eine gegenüber dem Ausschnitt X alternative Ausgestaltung der Vertiefungen 13 vorgesehen, deren einzelne Flanken jeweils nicht mehr symmetrisch zueinander, sondern asymmetrisch ausgebildet sind. Hierdurch wird die Energieaufnahme bei der Einfederung des Schwingungsdämpfers 1 eine gegenüber der Ausfederung verschiedene Charakteristik aufweisen.

Die Vertiefungen 13 sind in dem hier gezeigten Beispiel radial umlaufend ausgebildet. Durch eine gewindeförmige Ausgestaltung der Vertiefungen 13 ist es ebenfalls möglich, den arithmetischen Mittenrauhwert und die Gleitreibungszahl zu verändern, um damit Einfluß auf die Energieaufnahme- und Dämpfungsrate zu nehmen. Auch durch eine im Vergleich zu der in der Figur 1 dargestellten größeren Anlagefläche der Mantelfläche 12 gegen die Oberfläche 10, durch die sich die Kontur des Elastomerfederelementes 7 im Schnitt ändert, ist eine wunschgemäße Einstellung der oben genannten Parameter möglich. Die sich ergebenden maximalen Verzögerungskräfte bei gegebener kinetischer Energie sind hier gegenüber den aus dem Stand der Technik bekannten Pralldämpfern deutlich geringer.

Die Anlage des Elastomerfederelementes 7 an die Oberfläche 10 im Fall einer Kompression des Schwingungsdämpfers 1 erfolgt wegen der besonders ausgestalteten Geometrie des Elastomerfederelementes 7 zu wenigstens 30% der gesamten, rein rechnerisch bei Vollast zur Verfügung stehenden Fläche der Oberfläche 10. Damit wird nicht nur eine wie oben beschriebene Einsenkung des Schwingungsdämpfers 1, sondern auch auf einfache Weise eine vollständige und bezüglich der Dämpfungscharakteristik optimale Rückstellung des Elastomerfederelementes 7 bei Entlastung des Schwingungsdämpfers 1 ermöglicht, da die nach der Stauchung in dem Elastomerfederelement 7 eingeprägte Energie ausreicht, um die zwischen der Mantelfläche 12 und der Oberfläche 10 auftretenden Reibungskräfte zu überwinden. Die Rückstellung wird auch dadurch erleichtert, daß die in dem durch den unteren Abschnitt des Elastomerfederelementes 7, der Oberfläche 10 und dem Federanlagebereich 5 gebildeten Raum 14 befindliche, während der Stauchung des Elastomerfederelementes 7 durch Verringerung des Volumens des Raumes 14 komprimierte Luft in Rückstellungsrichtung wirkt. Durch die hier beschriebene Ausgestaltung wird ein gewünschtes aufprallgeschwindigkeitsabhängiges Kraft-Verformungsverhalten des Schwingungsdämpfers erzielt.

Da das Elastomerfederelement 7 sowohl bei Kompression als auch Entspannung im wesentlichen nur axial beansprucht wird, ist es verschleißarm ausgebildet. Diese Beanspruchungsrichtung hat weiter den Vorteil, daß die Wände der Lagerelemente 2 und 3 einer definierten Belastung unterliegen, was mit der Möglichkeit einer Verringerung der Wandstärken und somit einer geringeren Baugröße sowie kostengünstigen Herstellung des Schwingungsdämpfers 1 verbunden ist. Durch bekannte oder bestimmbare, definierte Spannungs- und Dehnungsverhältnisse könne die einzelnen Elemente des Schwingungsdämpfers 1 nach Leichtbaumethoden ausgebildet werden, wobei nur an diskreten Stellen lokale Verstärkungselemente, beispielsweise spantenartige Elemente, Versteifungsringe oder dergleichen, an den Lagerelementen 2, 3 vorgesehen sind. Die Verstärkungselemente können aus demselben oder einem anderen Werkstoff wie die Lagerelemente bestehen.

In Figur 2 ist ein Schwingungsdämpfer 1 gezeigt, dessen Elastomerfederelement 7 mit einem sich axial vom Federanlagebereich 4 bis zu dem Federanlagebereich 5 reichenden Hohlraum 15 ausgebildet ist. In dem Hohlraum ist ein sich von dem Federanlagebereich 5 in Richtung Federanlagebereich 4 erstreckendes Führungselement 16 angeordnet. Zur erleichterten Einbringung des Führungselementes und verbesserten Führung des Elastomerfederelementes 7 weisen der Hohlraum 15 und das Führungselement 16 etwa dieselbe Querschnittsform auf, wobei das Führungselement 16 an seinem dem Federanlagebereich 4 zugewandten Ende abgerundet ausgebildet ist. Bei einer Bewegung des Federanlagebereiches 4 und des Lagerelementes 2 im Fall eines Aufpralls wird das Elastomerfederelement 7 durch das Führungselement 16 in Verschiebungsrichtung ebenso geführt wie bei einer Entspannung des Elastomerfederelementes 7. Ein Ausknicken oder Beulen des Elastomerfederelementes 7 wird damit gänzlich vermieden. Weiter wird die in dem Hohlraum 15 befindliche Luft bei einem Aufprall komprimiert, was zu einer weiter verstärkten Anpressung der Mantelfläche 12 des Elastomerfederelementes 7 an der Oberfläche 10 des Lagerelementes 3 und damit zu erhöhten Wandreibungskräften führt. Damit wird die zuvor beschriebene Dämpfungswirkung weiter vergrößert.

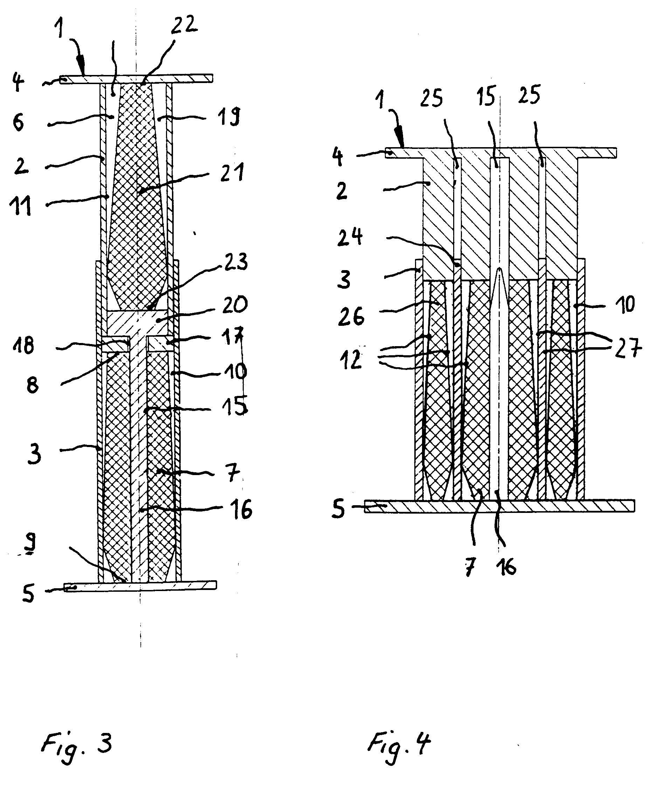

Die beschriebenen Schwingungsdämpfer können wie herkömmlich parallel oder seriell geschaltet werden, so daß sich die Federraten oder Federwege der einzelnen Schwingungsdämpfer addieren. Weiter ist es möglich, einen Schwingungsdämpfer derart ausbilden, daß er zwei parallel geschaltete Elastomerfederelemente aufnimmt. Der in Figur 3 gezeigte Schwingungsdämpfer 1 weist zwei Lagerelemente 2 und 3 auf, die als Hohlzylinder ineinander verschieblich ausgebildet sind. Jedes der Lagerelemente 2 bzw. 3 ist mit einem als Boden ausgebildeten Federanlagebereich 4 bzw. 5 verschlossen, so daß auch bei dieser Ausführungsform ein im wesentlichen zylindrischer Raum 6 gebildet wird. Das innere Lagerelement 2 weist an seinem dem Federanlagebereich 4 abgewandten Ende einen dieses abschließenden Federanlagebereich 17 auf, der mit einer Mittenöffnung 18 versehen ist. In dem dem Federanlagebereich 5 zugewandten Teil des Raumes 6 befindet sich ein Elastomerfederelement 7, das als ein sich in Richtung seiner Stirnflächen 8, 9 verjüngender Zylinder geformt ist. Die Stirnfläche 9 liegt gegen den Federanlagebereich 5 an, während die Stirnfläche 8 gegen die dem Federanlagebereich 5 zugewandte Seite des Federanlagebereiches 17 in Anlage kommt. Das Elastomerfederelement 7 liegt wie in Figur 1 beschrieben gegen die Oberfläche 10 an. Sie weist einen Hohlraum 15 auf, durch den sich ein in dieser Ausführungsform kolbenartiges Führungsglied 16 bis in einen von dem Federanlagebereich 4, dem Lagerelement 2 und dem Federanlagebereich 17 gebildeten Raum 19 erstreckt. Der Kolben 20 des Führungselementes 15 liegt mit seiner dem Federanlagebereich 5 zugewandten Seite gegen den Federanlagebereich 17 an, der somit den Kolben 20 hintergreift. Zwischen dem Federanlagebereich 4 und der diesem Federanlagebereich 4 zugewandten Seite des Kolbens 20 ist ein zweites Elastomerfederelement 21 derart eingepaßt, daß es mit seinen Stirnflächen 22 und 23 an den Federanlagebereich 4 und den Kolben 20 zur Anlage kommt. Das zweite Elastomerfederelement 21 weist eine ähnliche äußere Gestalt wie das erste Elastomerfederelement 7 auf, d.h. auch dieses ist als ein sich beidseitig verjüngender Zylinder ausgebildet, dessen maximaler Außendurchmesser etwa dem Innendurchmesser des Lagerelementes 2 entspricht. Sowohl das Elastomerfederelement 7 als auch das Elastomerfederelement 21 stehen bei nicht beanspruchtem Schwingungsdämpfer 1 unter Vorspannung. Ihre Anlageflächen an den Lagerelementen 2, 3 betragen im unbelasteten Zustand jeweils wenigstens 30%, vorzugsweise bis 70%, der gesamten Oberfläche der Lagerelemente 2, 3. Auch das zweite Elastomerfederelement 21 kann ein Führungselement 16 aufweisen (hier nicht dargestellt). Hinsichtlich der Materialeigenschaften der Elastomerfederelemente und der Ausgestaltung der Oberflächen 10, 11 der Lagerelemente 2, 3, insbesondere deren Oberflächengestaltung, gilt das oben Beschriebene.

In Figur 4 ist ein Schwingungsdämpfer 1 gezeigt, bei dem in dem Lagerelement 3 ein hohlzylindrisches, weiteres Führungselement 24 parallel zu dem Führungselement 16 und dem Lägerelement 3 angeordnet ist. Die Länge des Führungselementes 24 entspricht etwa der des Lagerelementes 3, so daß sich beide Elemente 3, 24 etwa gleich weit in Richtung Lagerelement 2 erstrecken. Das Lagerelement 2 ist mit einer zu dem zweiten Führungselement 24 korrespondierenden zylindrischen Vertiefung 25 versehen, so daß sich das Lägerelement 2 bei Belastung des Schwingungsdämpfers 1 in Richtung Federanlagebereich 5 bewegen und dabei das mittig angeordnete Elastomerfederelement 7 und ein zweites, parallel zu dem Elastomerfederelement 7 angeordnetes Elastomerfederelement 26 komprimieren kann. Das erste Elastomerfederelement 7 ist wie zuvor geschildert ausgeführt. Das zweite Elastomerfederelement 26 ist als eine Hohlzylinderfeder ausgestaltet, deren der Oberfläche 10 und dem zweiten Führungselement 24 zugewandte Mantelfläche 12 jeweils mit Verjüngungen ausgebildet sind. Beide Elastomerfederelemente 7 und 26 stehen im unbelasteten Zustand des Schwingungsdämpfers 1 unter einer definierten Vorspannung. Einige oder alle der Oberflächen 10 und 27 des Führungselementes 24 weisen die bereits zuvor beschriebene Ausgestaltung als Reibflächen auf. Mit der Anordnung eines zweiten Führungselementes 24 kann die Oberfläche der aufeinander reibenden Oberfläche 10 und Fläche 27 mit der Mantelfläche 12 vergrößert werden, um einen höheren Dämpfungswirkungsgrad zu erzielen. Die Anzahl der Elemente 24 und 26 kann im Zuge einer radialen Vergrößerung des Schwingungsdämpfers 1 zur Erhöhung der Energieaufnahme beliebig vergrößert werden.

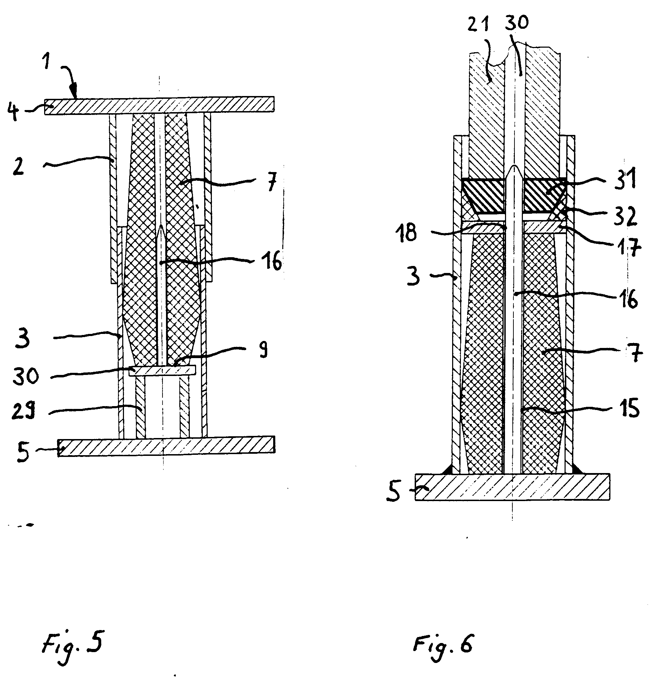

In Figur 5 ist ein entsprechend Figur 2 ausgestalteter Schwingungsdämpfer 1 mit einem irreversibel verformbaren Verzehrelement 28 ausgestattet. Das Verzehrelement 28 hat die Aufgabe, diejenige Energie aufzunehmen, die über eine dem reversiblen Arbeitsbereich des Schwingungsdämpfers 1 entsprechende Energie hinausgeht. Im Fall des hier dargestellten Pralldämpfers handelt es sich dabei um die Energie, die bei einem Aufprall von beispielsweise 4 km/h bzw. 8 km/h bis 15 km/h auf den Schwingungsdämpfer 1 einwirkt. Das hier betrachtete Energieverzehrelement 28 ist podestförmig ausgebildet, kann aber auch jede andere geeignete Form annehmen. Das Verzehrelement 28 ist zwischen dem Elastomerfederelement 7 und dem Federanlagebereich 5 geschaltet, indem es sich innerhalb des Lagerelementes 3 befindet, sich gegen dessen Federanlagebereich 5 abstützt und eine Lagerstelle für den dem Federanlagebereich 5 zugewandten Abschnitt des Elastomerfederelementes 7 bildet. Von der Podestfläche 29 ragt in diesem Ausführungsbeispiel das Führungselement 16 in den in dem Elastomerfederelement 7 vorhandenen Hohlraum 15 hinein. Bei einem angenommenen Aufprall von 4 km/h bzw. 8 km/h wird das Elastomerfederelement 7 reversibel verformt. Der Verformungsvorgang ist mit dem unter Figur 1 und 2 Beschriebenen identisch, wobei sich das dem Federanlagebereich 5 zugewandte Ende des Elastomerfederelementes 7 nicht auf dem Federanlagebereich 5 unmittelbar, sondern auf der Podestfläche 29 abstützt. Bei einer Geschwindigkeit bis 15 km/h wird zunächst das Elastomerfederelement 16 in Richtung Federanlagebereich 5 komprimiert. Die Kompression setzt sich fort, bis das podestförmige Verzehrelement 28 durch ein definiertes Versagen, beispielsweise Beulen oder Kricken, kollabiert. Durch die Zerstörung des Verzehrelementes 28 wird die über durch 4 km/h bzw. 8 km/h eingeprägte Energie hinausgehende Bewegungsenergie von dem Schwingungsdämpfer 1 aufgenommen, so daß keine weitere Störung der übrigen strukturellen Elemente eines Kraftfahrzeuges, wie Längs- oder Querträger, erfolgt. Sofern das Elastomerfederelement 7 die für eine Zerstörung des Verzehrelementes 28 notwendige Kraft ohne Schaden aufzunehmen in der Lage ist, kann das Verzehrelement 28 auswechselbar in dem Schwingungsdämpfer 1 angeordnet werden. Alternativ kann vorgesehen werden, daß die Lagerelemente 2 und/oder 3 nach Überschreiten einer bestimmten Maximallast, beispielsweise der durch eine Aufprallgeschwindigkeit von über 4 bzw. 8 km/h eingeprägten, irreversibel verformt werden und damit selbst als Energieverzehrelemente dienen.

Der in Figur 6 teilweise dargestellte Schwingungsdämpfer 1 weist zwei parallel geschaltete Elastomerfederelemente 7 und 21 auf, die beide durch ein und dasselbe Führungselement 16 axial geführt werden. Zu diesem Zweck sind die beiden fluchtend in dem Lagerelement 3 angeordneten Elastomerfederelemente 7, 21 mit zwei Hohlräumen 15 und 30 versehen, in die sich das lanzenförmige Führungsglied 16, ausgehend von dem Federanlagebereich 5, durch einen zwischen den Elastomerfederelementen 7, 21 befindlichen, mit einer Mittenöffnung 18 ausgeprägten Federanlagebereich 17 erstreckt. Das zweite Elastomerfederelement 21 ist an seinem dem Federanlagebereich 5 zugewandten Ende mit einem angefasten Absatz 31 versehen, der auf einem konischen Reibelement 32 aufliegt, das sich seinerseits auf dem Federanlagebereich 17 abstützt. Hierbei ist zu beachten, daß der Absatz 31 nicht aus demselben Material wie der Rest des Elastomerfederelements 21 besteht, sondern vielmehr aus einem diesem gegenüber unelastischen Material wie beispielsweise Metall.

Die Geometrie des Reibelementes 32 und dessen Material sind in Abhängigkeit der gewünschten Dämpfungscharakteristik des Schwingungsdämpfers 1 wählbar. Das Reibelement 32 steht unter konstanter oder bei Last veränderlicher Vorspannung und stellt eine weitere Reibfläche für das Elastomerfederelement 21 dar, mit der die Wandreibungsfläche bei einer Bewegung des Elastomerfederelementes 21 in Richtung Federanlagebereich 5 im Fall eines Aufpralls gegebenenfalls vergrößert werden kann. Das Reibelement 32 selbst ebenso wie die Elastomerfederelemente 7 und 21 sind abriebsfest ausgebildet. Das zweite Elastomerfederelement 21 kann, mit Ausnahme des an das Reibelement 32 anliegenden Absatzes 31, wie abgebildet zylindrisch oder wie zuvor beschrieben konturiert geformt sein.

Während die Federanlagebereiche 4 bzw. 5 in den Figuren 1 und 2 an die Lagerelemente 2 und 3 mittels Schweißnähten 33 befestigt sind, können auch andere Verbindungsarten, wie beispielsweise Kleben, oder alternativ eine einstückige Gestaltung der Lagerelemente 2 bzw. 3 mit den korrespondierenden Federanlagebereichen 4 bzw. 5 vorgesehen werden. Die Gestaltung der Lagerelemente 2 und 3 mit den Federanlagebereichen 4 und 5 hängt dabei von den für diese Bauteile gewählten Materialien ab. Als Konstruktionwerkstoffe können Metall, Kunststoff, Keramik oder Faserverbundwerkstoffe wie Aramid-, Glasfaser- und Kohlefaserverbunde vorgesehen werden. Alle zuvor genannten Lagerelemente 2,3 und Führungselemente 16,24 können mit den beschriebenen Vertiefungen 25 beispielsweise von 0,2 mm Tiefe versehen sein, um eine optimale Einstellung der Schwingungsdämpfungsrate vornehmen zu können.

Die geringe Anzahl der vorgesehenen Bauteile und die Vermeidung flüssiger Medien führen zu einem einfach montierbaren und demontierbaren, leicht zu recycelnden Schwingungsdämpfer. Insbesondere sind die Elastomerfederelemente 7,21,26 leicht austauschbar, da diese lediglich in den von den Lagerelementen 2,3 gebildeten Raum 6 eingelegt und von den Federanlagebereichen 4,5 vorgespannt werden müssen.

## Patentansprüche

1. Schwingungsdämpfer (1) mit zwei zueinander verschieblichen Lagerelementen (2, 3), die jeweils einseitig von einem Federanlagebereich (4, 5) begrenzt sind, und einem in den Lagerelementen (2, 3) befindlichen Elastomerfederelement (7), dessen Stirnflächen (8, 9) jeweils gegen den Federanlagebereich (4, 5) anliegen, **dadurch gekennzeichnet, daß** das Elastomerfederelement (7) derart ausgebildet und zwischen den Lagerelementen (2, 3) angeordnet ist, daß es bei der Verschiebung der Lagerelemente (2, 3) mit zumindest einem Teilbereich seiner Mantelfläche (12) mit zumindest einem der Lagerelemente (2, 3) in Reibungskontakt gelangt, wobei sich der Reibungskontaktbereich bei der Verschiebung ändert.

2. Schwingungsdämpfer (1) nach Anspruch 1, dadurch gekennzeichnet, daß der Mittenrauhwert Rₐ zwischen Elastomerfederelement (7) und den Lagerelementen (2, 3) und die Gleitreibungszahl µ zur Festlegung der Dämpfungswirkung und des Dämpfungswirkungsgrades eingestellt sind, vorzugsweise mit einem arithmetischen Mittenrauhwert Rₐ gleich oder größer als 12 µm und einer Gleitreibungszahl µ von mindestens 0,2.

3. Schwingungsdämpfer (1) nach Anspruch 1 oder 2, dadurch gekennzeichnet, daß die Mantelfläche (12) des Elastomerfederelementes (7) im unbelasteten Zustand gegen die Oberfläche (10, 11) wenigstens eines Lagerelementes (2, 3) teilweise, vorzugsweise zu wenigstens 30% der gesamten Oberfläche (10, 11) der Lagerelemente (2, 3) im voll belasteten Zustand, anliegt.

4. Schwingungsdämpfer (1) nach einem der Ansprüche 1 bis 3, dadurch gekennzeichnet, daß das Elastomerfederelement (7) von einem Führungselement (16) in Verschiebungsrichtung geführt ist, welches sich vorzugsweise in einem Hohlraum (15) des Elastomerfederelementes (7) befindet und/oder daß vorzugsweise parallel zu dem Führungselement (16) mindestens ein weiteres Führungselement (24) angeordnet ist.

5. Schwingungsdämpfer (1) nach einem der Ansprüche 1 bis 4, dadurch gekennzeichnet, daß mit dem Elastomerfederelement (7) zumindest ein weiteres Elastomerfederelement (21) parallel geschaltet ist und/oder daß vorzugsweise die einem Federanlagebereich (4) zugewandte Stirnfläche (8) des Elastomerfederelementes (7) gegen einen das Lagerelement (2) abschließenden Federanlagebereich (17) anliegt, durch dessen Mittenöffnung (18) sich ein kolbenförmiges Führungselement (16) erstreckt, dessen Kolben (20) gegen die dem Federanlagebereich (4) abgewandte Seite gegen den Federanlagebereich (17), und dessen dem Federanlagebereich (4) zugewandte Seite gegen ein zwischen ihm und dem Federanlagebereich (4) befindliches Elastomerfederelement (21) anliegt.

6. Schwingungsdämpfer (1) nach einem der Ansprüche 1 bis 5, dadurch gekennzeichnet, daß an der Oberfläche (10, 11) des Hülsenelementes (2, 3) und/oder dem Führungselement (16, 24) Vertiefungen (13), vorzugsweise von mindestens 0,1 mm Tiefe, ausgebildet sind, wobei vorzusgweise die Vertiefungen (13) umlaufend und/oder gewindeförmig und/oder trapez- oder sägezahnförmig und/oder symmetrisch und/oder asymmetrisch ausgebildet sind.

7. Schwingungsdämpfer (1) nach einem der Ansprüche 1 bis 6, dadurch gekennzeichnet, daß zu wenigstens einem Elastomerfederelement (7, 21) zumindest ein irreversibel verformbares Verzehrelement (28) in Reihe geschaltet ist und/oder daß zumindest ein Lagerelement (2, 3) derart angeordnet ist, daß es nach Überschreiten einer vorgegebenen Last irreversibel verformt ist.

8. Schwingungsdämpfer (1) nach einem der Ansprüche 1 bis 7, dadurch gekennzeichnet, daß ein Reibungselement (32) an mindestens einer der Stirnflächen (8, 9) des Elastomerfederelementes (7, 21) angeordnet ist und/oder daß sich mindestens an einem Hülsenelement (2, 3) mindestens ein Verstärkungselement befindet.

9. Schwingungsdämpfer (1) nach einem der Ansprüche 1 bis 8, dadurch gekennzeichnet, daß das Elastomerfederelement (7, 21) aus einem zelligen Polyurethan, vorzugsweise mit einer Dichte von 300 bis 800 kg/m³, besteht.

10. Schwingungsdämpfer (1) nach einem der Ansprüche 1 bis 9, dadurch gekennzeichnet, daß das Elastomerfederelement (7, 21) bei der Verschiebung der Lagerelemente (2, 3) komprimiert ist.

11. Verwendung eines Schwingungsdämpfers (1) nach einem der Ansprüche 1 bis 10 als Pralldämpfer, vorzugsweise bei einem Kraftfahrzeug, einem Luftfahrzeug, einem Schienenfahrzeug oder einem Aufsetzpuffer eines Kranes oder Fahrstuhles.
